Europäisches Patentamt

European Patent Office

Office européen des brevets

(11) Veröffentlichungsnummer: **0 222 731**
A2

# (12) EUROPÄISCHE PATENTANMELDUNG

(21) Anmeldenummer: 86890289.1

(22) Anmeldetag: 23.10.86

(51) Int. Cl.⁴: **B 01 D 53/04**

(30) Priorität: 11.11.85 AT 3275/85

(43) Veröffentlichungstag der Anmeldung:
20.05.87 Patentblatt 87/21

(84) Benannte Vertragsstaaten: **DE FR GB IT SE**

(71) Anmelder: **VOEST-ALPINE Aktiengesellschaft**
**Friedrichstrasse 4**
**A-1011 Wien (AT)**

(72) Erfinder: **Buttinger, Christian**
**Wienerstrasse 214a**
**A-4020 Linz (AT)**

**Faltejsek, Karl, Dipl.-Ing.**
**Lüfteneggerstrasse 6**
**A-4020 Linz (AT)**

**Wawrina, Rainer**
**Leitergraben 39**
**A-4060 Leonding (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) Druckwechseladsorber für die Aufnahme von körnigen Adsorptionsmitteln.

(57) Ein Druckwechseladsorber weist einen druckfesten Behälter (1) mit Einlaßstutzen und Ablaßstutzen für das zu reinigende Gas auf. Das körnige Adsorptionsmittel wird in ringförmigen Kammern (9) zwischen zylindrischen Wänden (4 und 5) gehalten, welche zumindest teilweise gasdurchlässig ausgebildet sind. Um eine Kompression des körnigen Adsorptionsmittels (6) bei Druckwechselbeanspruchungen bzw. bei Temperaturbeanspruchungen zum Zwecke der Desorption zu verringern sind Abstützflächen (10) vorgesehen, welche sich radial über die lichte Weite zwischen den Zylindermänteln (4 und 5) erstrecken und in axialer Richtung abgestützt sind. Die Abstützung kann durch Verbinden der Stützflächen (10) mit dem Innenmantel (5) und/oder dem Außenmantel (4) erzielt werden.

FIG. 1

EP 0 222 731 A2

**Beschreibung**

Druckwechseladsorber für die Aufnahme von körnigen Adsorptionsmitteln

Die Erfindung bezieht sich auf einen Druckwechseladsorber für die Aufnahme von körnigen Adsorptionsmitteln, bei welchem das Adsorptionsmittel, insbesondere ein Molsiebmaterial, als im wesentlichen zylinderförmige Säule zwischen zumindest teilweise gasdurchlässigen Mantelflächen angeordnet und in radialer Richtung durchströmbar ist.

Adsorber der eingangs genannten Art werden zumeist als Vorstufe in Gastrennverfahren eingesetzt. Im Anschluß an derartige Adsorber, welche beispielsweise als Molsiebe bezeichnet werden, kann die Reingewinnung von Sauerstoff und Stickstoff durch Tieftemperaturrektifikation erfolgen. Mit derartigen Adsorptionsmitteln können aber auch Kohlensäure, Wasserdampf, Kohlenwasserstoffe od.dgl. vor einer Luftzerlegung abgetrennt werden. Üblicherweise werden derartige Adsorber in Druckbehältern angeordnet, wobei die Druckbehälter aufgrund der üblicherweise niedrigen Schütthöhe von Molsiebmaterial, welche in der Regel etwa 0,8 m beträgt, sehr flach gebaut sind und relativ aufwendige Böden aufweisen. Im Betrieb werden derartige Druckwechseladsorber mit Drücken von 6 bis 13 bar beaufschlagt, wobei für die Desorption des jeweils adsorbierten Gasbestandteiles neben einer raschen Druckentlastung auch erhöhte Temperaturen angewendet werden.

Bei den bekannten Behältern für Druckwechseladsorber entstehen im Betrieb eine Reihe von Problemen. Zunächst muß eine homogene Schüttung über die gesamte wirksame Querschnittsfläche sichergestellt werden, welche vom zu zerlegenden Gas durchströmt wird. In der Folge von Strömungsphänomenen ergibt sich häufig eine Wellenbildung an der Oberfläche, welche durch aufwendige Rechen glattgestrichen werden muß. Beispielsweise ist aus der DE-OS 1 922 992 eine Ausbildung bekanntgeworden, bei welcher die Oberfläche des Adsorptions mittels mit einem Gitterrost abgedeckt ist, um die Ausbildung von Wellen zu verhindern und das Glattstreichen zu erleichtern. Eine derartige Wellenbildung hat zur Folge, daß im Bereich des Wellentales, also bei geringster Schütthöhe, rasch ein Durchbruch der unerwünschten Gaskomponente, welche vom Adsorbermaterial zurückgehalten werden sollte, erfolgt. Im Zuge des Regenerierens werden die Durchbruchstellen für die neuerliche Beladung besonders aufnahmefähig gemacht, was einen geringeren Strömungswiderstand und aufgrund des örtlich größeren Durchsatzes den nächsten Durchbruch früher zur Folge hat. Auf diese Weise ergibt sich eine instabile Betriebsweise von Adsorptionsmitteln und die mögliche Beladungszeit wird immer kleiner.

Allgemein gilt für die Konstruktion von Gefäßen bzw. Behältern für Adsorptionsmittel, daß die Druckgefäße möglichst einfach ausgebildet sein sollen und ein geringes Totvolumen aufweisen sollen, das entspannt bzw. ausgespült werden muß. Besonders dann, wenn das gewünschte Produkt vom Adsorptionsmittel zurückgehalten wird, beispielsweise bei der Adsorption von Sauerstoff, muß solange gespült werden, bis der verbleibende Stickstoff aus dem Behälter verdrängt ist, um ein reines Produktgas abziehen zu können.

Aus der europäischen Anmeldung 118 349 ist bereits ein Adsorber der eingangs genannten Art bekanntgeworden, bei welchem das Adsorptionsmittel zwischen im wesentlichen zylinderförmigen Mantelflächen enthalten ist. Auf diese Weise läßt sich eine definierte Schichtstärke über eine große Fläche sicherstellen, da derartige Einrichtungen im wesentlichen radial durchströmt werden. Nachteilig bei derartigen Ausbildungen ist jedoch die Tatsache, daß aufgrund der Füllhöhe Absetzerscheinungen und Kompaktierungen innerhalb der Säule beobachtet werden, welche zu Inhomogenitäten innerhalb der Säule führen und die gleichmäßige Durchströmung des Materials behindern. Insbesondere dann, wenn für das Freisetzen des adsorbierten Mediums heiße Gase eingesetzt werden, kommen in diesem Falle noch Temperaturspannungen hinzu, welche zu einer weiteren regionalen Kompression des Adsorptionsmittels und damit zu weiteren Inhomogenitäten in der Füllung führen. Gemäß der EU-A-118 349 wurde aus diesem Grunde bereits vorgeschlagen, die Mantelflächen so auszubilden, daß sie sich in axialer Richtung thermisch ausdehnen können, um übermäßige Kompressionen auf die in radialer Richtung aufgebaute Schicht zu vermeiden.

Die Erfindung zielt nun darauf ab, einen einfachen Druckwechseladsorber der eingangs genannten Art zu schaffen, bei welchem auch Materialien als Adsorptionsmittel eingesetzt werden können, welche nur geringe Druckresistenz aufweisen und daher leicht verdichtet werden könnten oder durch Abplatzungen beschädigt werden können. Zur Lösung dieser Aufgabe besteht die Erfindung im wesentlichen darin, daß innerhalb der zylinderförmigen Säule sich radial über die kreisringförmige Querschnittsfläche der Säule erstreckende in axialer Richtung abgestützte Abstützflächen angeordnet sind. Die Füllhöhe in axialer Richtung wird dadurch in einzelne Teilabschnitte unterteilt, welche gesondert abgestützt sind, so daß eine Kompaktierung über die axiale Höhe der Füllung nicht erfolgt. Die einzelnen Abstützflächen können hiebei von Ringscheiben, welche selbst gasdurchlässig ausgebildet sein können, von konischen Scheiben und wie es einer bevorzugten Ausbildung entspricht, von wendelförmig verlaufenden Abstützflächen gebildet sein. Insbesondere bei wendelförmig verlaufenden Abstützflächen gestaltet sich das Befüllen des Druckwechseladsorbers besonders einfach, da die Steigung der Wendel größer gewählt werden kann als der natürliche Schüttkegel des einzufüllenden Materials, so daß sich eine relativ homogene Beschickung über die gesamte Höhe ergibt. Mit Rücksicht auf mögliche Unregelmäßigkeiten in der Schütthöhe zwischen in Achsrichtung benachbarten Wendelflächen sind mit Vorteil an der Unterseite der Wendelflächen in Umfangsrich tung geschlossen verlaufende Vorsprünge vorgesehen, welche in das Material der Beschickung eintauchen, wodurch ein Vorbeiströmen des Gases an der Beschickung in radialer Richtung verhindert wird.

Bei durchgehenden Wendelflächen ist allerdings weiterhin aufgrund der verbleibenden in Achsrichtung wirksamen Kraftkomponente des Eigengewichtes der körnigen Adsorptionsmittel die Gefahr gegeben, daß eine Kompaktierung im unteren Teilbereich bei häufigen Druckwechselbeanspruchungen und thermischen Beanspruchungen eintritt. In vorteilhafter Weise weist wenigstens eine Wendelfläche wenigstens an ihrer Unterseite in radialer Richtung verlaufende Rippen auf. Auf diese Weise wird sichergestellt, daß der Raum zwischen den Wendelflächen nicht vollständig gefüllt wird, und daß jeweils unmittelbar im Anschluß an eine derartige Rippe ein Hohlraum zur Unterseite der darüberliegenden Wendel verbleibt. Die in das körnige Adsorptionsmittel eintauchenden Vorsprünge bilden hiebei eine Sicherung gegen Vorbeiströmen an dem Beschickungsmaterial, wobei bei thermischen Behandlungen für das Desorbieren von adsorbierten Gasen ein Ausgleichsraum verbleibt, in welchen das körnige Adsorptionsmittel bzw. das Molsiebmaterial ausweichen kann, ohne daß es zu einer Überbeanspruchung des Adsorbermaterials oder der zylindrischen Mantelflächen kommt. Die radialen Rippen dürfen naturgemäß keine größere Höhe zur Wendelfläche aufweisen als die in Umfangsrichtung geschlossenen Vorsprünge. Die Wendelflächen können mit den Zylindermänteln starr verbunden sein oder aber durch gesonderte Distanzhalter im vorgegebenen Abstand voneinander gehalten werden. Die Unterteilung des Ringraumes für die Beschickung mit körnigen Adsorptionsmitteln in einzelne Abschnitte bzw. Kammern erlaubt auch eine andere vorteilhafte Betriebsweise, bei welcher die Ausbildung mit Vorteil so getroffen ist, daß die Abstützflächen gasdurchlässig ausgebildet sind und in Achsrichtung abwechselnd Ringkammern frei von Molsiebmaterial gehalten sind, wobei die von Adsorptions mittel bzw. Molsiebmaterial freien Ringkammern sowie die in Achsrichtung benachbarten mit Adsorptionsmittel bzw. Molsiebmaterial füllbaren Ringkammern abwechselnd über einen gasdichten Innen- oder Außenzylinder verbunden sind. Bei einer derartigen Ausbildung ist abwechselnd ein von körnigem Adsorptionsmittel freier Raum mit dem Außenraum und der benachbarte von Adsorptionsmitteln freie Raum mit dem zentralen Hohlraum verbunden, wobei das Gas die Beschickung jeweils axial über die zwischen benachbarten gasdurchlässigen Stützflächen enthaltenen körnigen Adsorptionsmittel geführt wird und je nach Strömungsrichtung nach innen bzw. nach außen abgeführt wird.

Sowohl die wendelförmig verlaufenden als auch ringförmige Abstützflächen können zur Achse geneigt, insbesondere unter Einschluß eines Winkels von 15 bis 30° zu radialen Richtungen geneigt, verlaufen, wobei dieser Winkel wiederum etwas größer als der freie Schüttkegel gewählt ist, um die vollständige Füllung der einzelnen Abschnitte bzw. Bereiche sicherzustellen. Bei derartig geneigten Abstützflächen kann es aber wiederum, besonders bei überaus druckempfindlichen Molsiebmaterialien, zum Aufbau unerwünschten Druckes in der Schüttung kommen, welcher zumindest teilweise durch zusätzliche sich in radialer Richtung über einen Teil der Querschnittsfläche erstreckende Stützflächen, insbesondere Wendelflächen, aufgenommen werden kann.

Eine weitere Vergleichmäßigung der Druckbeanspruchung läßt sich dann erreichen, wenn die Abstützflächen im Axialschnitt gekrümmt verlaufen, um den Druckverhältnissen besser Rechnung zu tragen.

Bei einem in mehreren Etagen gelagerten Molsieb mit optimaler Raumausnutzung kann die Ausbildung mit Vorteil so getroffen sein, daß die Abstützflächen im Axialschnitt von paarweise entgegengesetzt geneigten Flächen gebildet sind, wobei die Schüttung wiederum zwischen gasdurchlässigen Böden bzw. Decken der einzelnen Scheiben festgehalten ist. Auch hier ist die Gefahr einer Wellenbildung gering, wobei durch die Ausbildung der einzelnen Kammern mit geneigten Flächen eine lückenlose Füllung der Scheibenabschnitte leichter gewährleistet ist. Zur Befüllung bzw. zum Ablassen des Adsorptionsmittels können mit Vorteil längs des Umfanges der Stützflächen Füll- und Ablaßanschlüsse für das Adsorptionsmittel bzw. Molsiebmaterial vorgesehen sein.

Für die restlose Entleerung kann es vorteilhaft sein, durch geeignete Öffnungen Blaslanzen einzuführen oder aber fix installierte Düsenstöcke vorzusehen, über welche die Festkörperschüttung über den Ablaßrohren aufgelockert wird und anschließend den Ablaßanschlüssen zugeführt wird.

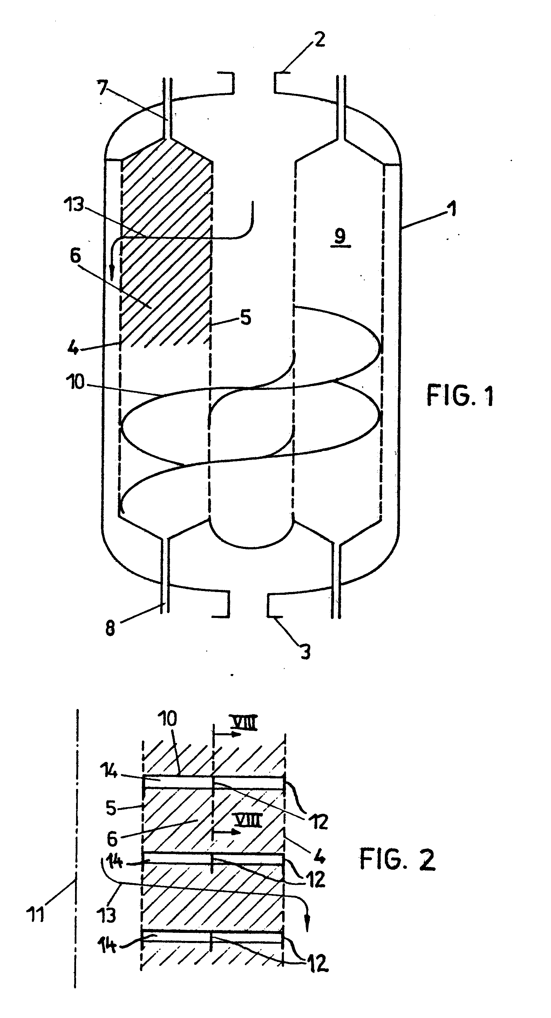

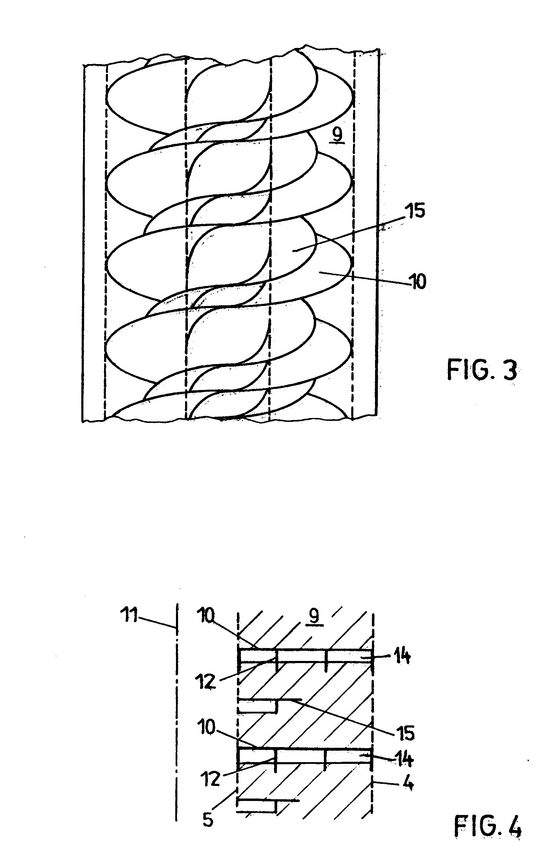

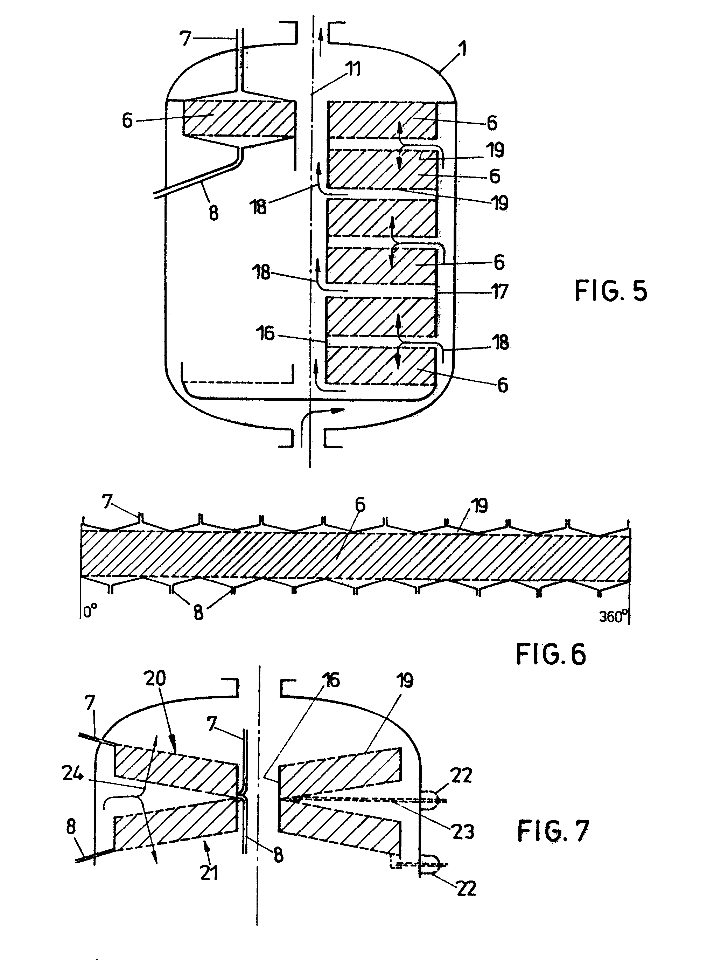

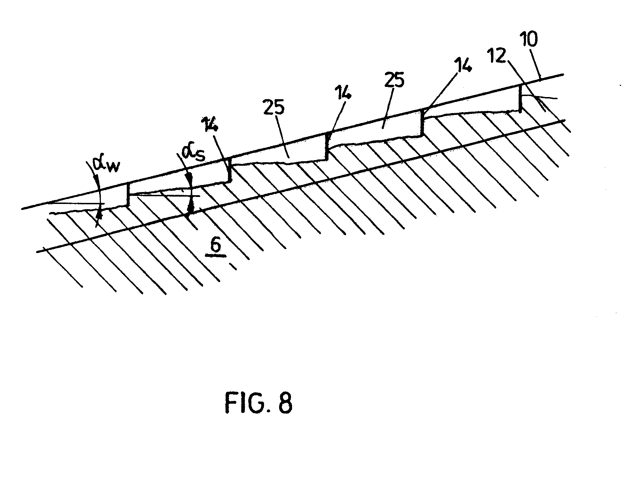

Die Erfindung wird nachfolgend anhand von in der Zeichnung dargestellten Ausführungsbeispielen näher erläutert. In dieser zeigen Fig.1 eine schematische Darstellung eines Druckwechseladsorbers teilweise im Schnitt, Fig.2 einen teilweisen Axialschnitt durch die Anordnung nach Fig.1, Fig.3 ein Detail einer abgewandelten Ausbildung in analoger Ansicht wie Fig.1, Fig.4 einen Axialschnitt durch einen Teilbereich der Ausbildung nach Fig.3, Fig.5 eine weitere abgewandelte Ausbildung eines Druckwechselreaktors bzw. Druckwechseladsorbers gemäß der vorliegenden Erfindung, Fig.6 eine Abwicklung einer Etage der Ausbildung nach Fig.5. Fig.7 eine weitere abgewandelte Ausbildung des Adsorbers in schematischer Darstellung im Axialschnitt und Fig.8 eine Abwicklung entsprechend dem Schnitt VIII-VIII der Fig.2.

In Fig.1 ist ein druckfester Behälter 1 dargestellt, welcher einen Anschluß 2 für das Einpressen von Gasen und einen Anschluß 3 für das Abziehen des gereinigten Gases aufweist. Zwischen im wesentlichen zylindermantelförmigen gasdurchlässigen Wänden 4 und 5 ist Molekularsieb bzw. Molsiebma terial 6 eingeschlossen, welches über einen Einfüllstutzen 7 eingefüllt und über Ablaßstutzen 8 abgezogen werden kann. Innerhalb des Ringraumes 9, welcher das Molsiebmaterial 6 enthält, sind wendelförmige Stützflächen 10 angeordnet, welche den gesamten lichten Querschnitt zwischen der Innenwand 5 und der Außenwand 4 der Ringkammer ausfüllen. Diese Stützflächen 10 unterteilen somit den Ringraum 9 in Achsrichtung in aufeinanderfolgende Kammern, welche in Umfangsrichtung miteinander in Verbindung stehen, wodurch sich der axiale Druck, welcher bei Druckwechselbeanspruchungen und bei thermischen Beanspruchungen entsteht, auf das Material der Beschickung wesentlich verringern läßt.

In Fig.2 ist die Achse der Einrichtung mit 11 angedeutet und es ist im Axialschnitt ersichtlich, daß die Wendelflächen 10 an ihrer Unterseite in Umfangsrichtung verlaufende Vorsprünge 12 aufweisen, welche in das Material der Beschickung, nämlich das Molsiebmaterial 6, eintauchen. Die Gasströmung verläuft hiebei längs des schematisch angedeuteten Pfeiles 13 von innen nach außen. Zwischen den in die Beschickung 6 eintauchenden Vorsprüngen 12 wird jeweils oberhalb der Beschickung zwischen der darüberliegenden wendelförmigen Abstützfläche 10 und der Oberkante der Beschickung durch radiale Rippen 14 ein Raum freigehalten, in welchen das Material bei thermischen Beanspruchungen expandieren kann. Der Freiraum über der Schüttung bildet sich, weil senkrecht zu den Vorsprüngen 12, also radial an der Unterseite, Wendelrippen angeordnet sind, an denen die Molsiebschüttung abgestützt ist, wobei sich hinter den radialen Rippen der Freiraum ausbilden kann. Die mittlere Neigung der Wendel 10 ist hiefür etwas größer als der Schüttwinkel des Molsiebgranulates. Gleichzeitig wird durch die Vorsprünge 12 sichergestellt, daß das Gas nicht ungehindert an der Beschickung 6 vorbeiströmen kann.

Bei der Ausbildung nach Fig.3 ist eine Doppelwendel ersichtlich, wobei die ersten wendelförmigen Stützflächen wiederum mit 10 bezeichnet sind und die zweiten, sich nicht über die gesamte radiale Breite der Ringkammer 9 erstreckenden Wendelflächen mit 15 bezeichnet sind. Die zusätzlichen Wendelflächen 15 dienen hiebei der zusätzlichen Druckabstützung bei Druck- bzw. thermischen Beanspruchungen des Materials der Beschickung, in Achsennähe ist die Abstützwirkung wegen der größeren Wendelsteigerung geringer, wobei die zusätzlichen Wendelflächen gewissermaßen eine Unterteilung der Schütthöhe einer Etage bewirken.

In der ausschnittsweisen Darstellung nach Fig.4 sind wiederum die in das Innere der Beschickung eintauchenden, in Umfangsrichtung geschlossenen Vorsprünge 12 ersichtlich, welche mit den Wendelflächen 10 verbunden sind und jeweils an die Unterkante dieser Wendelflächen 10 anschließen.

Bei der Ausbildung nach Fig.5 erfolgt die Durchströmung des Adsorptionsmittels 6 in im wesentlichen axialer Richtung, wobei jeweils etagenweise zwei übereinanderliegende mit Adsorptionsmittel gefüllte Ringkammern mit undurchlässigen zylindrischen Wandteilen 16 an der Innenseite und 17 an der Außenseite miteinander verbunden sind. Zwischen diesen beiden etagenförmig übereinander angeordneten Ringkammern verbleibt ein freier Raum, über welchen Gas einströmen oder aus welchem Gas ausströmen kann, wobei die Strömungsrichtung beispielsweise durch die Pfeile 18 angedeutet ist. In analoger Weise kann natürlich auch eine umgekehrte Durchströmungsrichtung gewählt werden. Bei dieser Ausbildung sind somit die zylinderförmigen Mäntel nur teilweise gasdurchlässig, da immer wieder Bereiche dieser Wände gasundurchlässig ausgebildet sein müssen um die Strömungsrichtung aufrechtzuerhalten. Die mit körnigen Adsorptionsmitteln gefüllten Kammern können von Wendelflächen begrenzt sein, oder aber auch von Ringscheiben oder kegelförmig geneigten Ringscheiben begrenzt werden. Die Stützflächen, welche hier mit 19 bezeichnet sind, müssen allerdings gasdurchlässig ausgebildet sein, da ja die Durchströmung in axialer Richtung erfolgen soll. Die Befüllung erfolgt wiederum über Füllstutzen 7 und das Ablassen des körnigen Adsorptionsmittels kann über Ablaßstutzen 8 vorgenommen werden. In Umfangsrichtung können eine Mehrzahl derartiger Füllstutzen und Ablaßstutzen angeordnet sein, wie dies in Fig.6 in der Abwicklung einer Etage gezeigt ist.

In Fig.6 ist die Abwicklung einer Etage über 360° dargestellt, wobei in Abständen und in axialer Richtung versetzt jeweils Füllstutzen 7 und Ablaßstutzen 8 angeordnet sind.

Bei der Darstellung nach Fig.7 ist eine abgewandelte Ausbildung gewählt, bei welcher Stützflächen 19, welche wiederum gasdurchlässig ausgebildet sind, paarweise entgegengesetzt geneigt sind. Es werden somit Kammern gebildet, welche von konischen Flächen begrenzt sind, wobei aufeinanderfolgende Etagen 20 und 21 entgegengesetzt geneigt angeordnet sind. Die Befüllung erfolgt wiederum über die Füllstutzen 7, wobei der Ablauf des körnigen Adsorptionsmittels über die Ablaßstutzen 8 erfolgen kann. Zusätzlich sind bei dieser Ausbildung Anschlußstellen 22 vorgesehen, über welche Spüllanzen 23 eingeführt werden können, um das vollständige Entleeren vor dem neuerlichen Befüllen zu erleichtern. Die beiden dargestellten Etagen 20 und 21 sind an ihrer Innenseite durch einen undurchlässigen Wandteil 16 miteinander verbunden. Die nächstfolgende in Achsrichtung nach unten anschließende Etage muß über einen nach außen geschlossenen Wandteil mit der vorangehenden Etage verbunden werden, um die Strömungsrichtung entsprechend dem Pfeil 24 oder in entsprechend umgekehrter Richtung aufrechtzuerhalten.

Aus der Darstellung nach Fig. 8 ist die Ausbildung der Freiräume hinter radialen Rippen deutlich ersichtlich. Fig. 8 zeigt hiebei eine Abwicklung einer Wendelfläche im Schnitt nach Linie VIII - VIII der Fig. 2. Der entstehende Hohlraum ist mit 25 bezeichnet, wobei $w$ den Steigungswinkel der Wendel und $s$ den Schüttwinkel der Beschickung bezeichnet. $s$ muß größer als der $w$ sein.

**Patentansprüche**

1. Druckwechseladsorber (1) für die Aufnahme von körnigen Adsorptionsmitteln (6), bei welchem das Adsorptionsmittel, insbesondere Molsiebmaterial, als im wesentlichen zylinderförmige Säule zwischen zumindest teilweise gasdurchlässigen Mantelflächen (4,5) angeordnet und in radialer Richtung durchströmbar ist, dadurch gekennzeichnet, daß innerhalb der zylinderförmigen Säule sich radial über die kreisringförmige Querschnittsfläche der Säule erstreckende in axialer Richtung abgestützte Abstützflächen (10) angeordnet sind.

2. Druckwechseladsorber nach Anspruch 1, dadurch gekennzeichnet, daß die Abstützflächen (10) wendelförmig verlaufen.

3. Druckwechseladsorber nach Anspruch 2, dadurch gekennzeichnet, daß wenigstens eine Wendelfläche (10) wenigstens an ihrer Unterseite in Umfangsrichtung geschlossene Vorsprünge (12) aufweist.

4. Druckwechseladsorber nach Anspruch 3, dadurch gekennzeichnet, daß an der Unterseite der Wendelflächen (10) in radialer Richtung verlaufende Rippen (14) angeordnet sind.

5. Druckwechseladsorber nach Anspruch 1 bis 4, dadurch gekennzeichnet, daß die Abstützflächen (10) gasdurchlässig ausgebildet sind und in Achsrichtung abwechselnd Ringkammern (9) frei von Molsiebmaterial (6) gehalten sind, wobei die von Adsorptionsmittel bzw. Molsiebmaterial (6) freien Ringkammern (9) sowie die in Achsrichtung benachbarten mit Adsorptionsmittel bzw. Molsiebmaterial (6) füllbaren Ringkammern (9) abwechselnd über einen gasdichten Innen- oder Außenzylinder (16,17) verbunden sind.

6. Druckwechseladsorber nach einem der Ansprüche 1 bis 5, dadurch gekennzeichnet, daß die Abstützflächen (10) zur Achse geneigt, insbesondere unter Einschluß eines Winkels von 15° - 30° zu radialen Richtungen geneigt verlaufen.

7. Druckwechseladsorber nach einem der Ansprüche 1 bis 6, dadurch gekennzeichnet, daß die Abstützflächen (10) im Axialschnitt von paarweise entgegengesetzt geneigten Flächen gebildet sind.

8. Druckwechseladsorber nach einem der Ansprüche 1 bis 7, dadurch gekennzeichnet, daß die Abstützflächen (10) im Axialschnitt gekrümmt verlaufen.

9. Druckwechseladsorber nach einem der Ansprüche 1 bis 8, dadurch gekennzeichnet, daß längs des Umfanges der Stützflächen Füll- und Ablaßanschlüsse (7,8) für das Adsorptionsmittel bzw. Molsiebmaterial (6) vorgesehen sind.

10. Druckwechseladsorber nach einem der Ansprüche 1 bis 9, dadurch gekennzeichnet, daß zusätzliche, sich in radialer Richtung über einen Teil der Querschnittsfläche erstreckende Stützflächen, insbesondere Wendelflächen (15) angeordnet sind.

FIG. 1

FIG. 2

0222731

FIG. 3

FIG. 4

0222731

FIG. 5

FIG. 6

FIG. 7

FIG. 8